# EUROPÄISCHE PATENTSCHRIFT

(11) **EP 1 245 418 B1**
(45) Veröffentlichungstag und Bekanntmachung des Hinweises auf die Patenterteilung: **21.07.2004**
(21) Anmeldenummer: 02006255.0
(22) Anmeldetag: 20.03.2002
(51) Int. Cl.: B60J 7/00

(54) **Als Solargenerator ausgebildeter Deckel zum Verschliessen einer Öffnung in der Karosserie eines Fahrzeugs**
Panel configured as solar generator to close an opening for vehicle body
Panneau configuré comme générateur solaire pour fermer une ouverture d'une carrosserie de véhicule

(30) Priorität: 28.03.2001 DE 10115372
(43) Veröffentlichungstag der Anmeldung: 02.10.2002
(73) Patentinhaber: ArvinMeritor GmbH, 63128 Dietzenbach (DE)
(72) Erfinder: Reimer, Klaus, Dipl.-Ing., 38518 Gifhorn (DE)
(74) Vertreter: Oppermann, Ewald, Dipl.-Ing.

(56) Entgegenhaltungen:
- EP-A- 0 901 918
- DE-C- 10 023 543
- DE-C- 19 716 389
- DE-C- 19 819 680

## Beschreibung

Die Erfindung bezieht sich auf einen als Solargenerator ausgebildeten Deckel zum Verschließen einer Öffnung in der Karosserie eines Fahrzeugs, insbesondere für Kraftfahrzeug-Schiebedächer, gemäß dem Oberbegriff des Patentanspruchs 1. Ferner bezieht sich die Erfindung auf ein Verfahren zur Herstellung eines solchen Deckels, gemäß dem Oberbegriff von Anspruch 8.

Die hier in Alleinstellung oder in Wortkombinationen verwendete Bezeichnung "Schiebedach" soll im Rahmen der vorliegenden Erfindung nicht nur solche Konstruktionen einschließen, bei denen der Deckel nach Absenken seiner Hinterkante zur Freigabe der Dachöffnung unter die hintere feste Dachfläche verschiebbar ist, sondern auch Schiebehebedächer, bei denen der Deckel außerdem ausgehend von seiner Schließstellung um eine in der Nähe seiner Vorderkante vorgesehene Schwenkachse zur Ausstellung über die feste Dachfläche verschwenkt werden kann. Auch vorn scharnierte lüftungsklappenähnlich ausstellbare Deckel und sogenannte Oberfirstschiebedächer, bei denen der Deckel nach Anheben seiner Hinterkante teilweise zur Freigabe der Dachöffnung über die hintere feste Dachfläche verschiebbar und bei einigen Konstruktionen auch zusätzlich verschwenkbar (Spoilerdach) ist, sollen eingeschlossen sein. Schließlich sollen hier auch Mehrdeckeldächer, bei denen mindestens ein Deckel ausstellbar sein kann, und auch Dächer mit abnehmbarem Deckel oder Deckelteilen durch die Bezeichnung "Schiebedach" erfaßt sein.

Aus der gattungsbildenden DE 197 39 615 C1 der Anmelderin ist ein als Solargenerator ausgebildeter Deckel - nachfolgend Solardeckel genannt - für Kraftfahrzeug-Schiebedächer bekannt, der eine Glasscheibe und ein aus einer Mehrzahl von kristallinen, elektrisch miteinander verbundenen Solarzellen bestehendes Solarzellenfeld aufweist, welches unterhalb der Glasscheibe angeordnet ist. Das Solarzellenfeld ist in seinen Außenabmessungen nur wenig kleiner als die freie Außenfläche der Glasscheibe, wobei an den Solardeckel ein Rahmen aus einem Kunststoff auf Polyurethanbasis mit einem niedrigen Schäumdruck angeschäumt ist, welcher die Außenrandbereiche des Solarzellenfeldes von unten überdeckt. Hierdurch wird einerseits erreicht, daß ein in seinen Außenabmessungen von der Deckelgröße vorgegebenes maximal großes Solarzellenfeld untergebracht werden kann, und andererseits, daß durch den niedrigen Schäumdruck und die diesen Druck begleitende niedrige Temperatur die Bruch- und Beschädigungsgefahr für die empfindlichen kristallinen Solarzellen weitgehend beseitigt wird. Allerdings ist hierbei die Reaktionsgeschwindigkeit geringer als bei herkömmlichen RIM-Schäumverfahren (Reaction-Injection-Moulding), bei denen höhere Drücke auftreten. Wegen der bei niedrigen Drücken längeren Reaktionszeiten ergeben sich längere Schließzeiten für die eingesetzten Schäumformen.

Ferner ist zur Vermeidung von Beschädigungen des Solarzellenverbunds bei der Herstellung eines Solardeckels vorgeschlagen worden (DE 198 19 680 C1), die Herstellung derart vorzunehmen, daß zunächst an den Rand einer Deckelplatte ein Kunststoffrahmen aus Polyurethan angeschäumt wird und sodann der Solarzellenverbund auf die Innenseite der Deckelplatte laminiert wird. Erst wenn dieser Verbund aus Deckelplatte und Kunststoffrahmen hergestellt ist, wird an diesen Verbund ein den Solardeckel aussteifendes Deckelinnenblech geklebt, welches vom Solarzellenverbund beabstandet ist. Dieses bekannte Verfahren ist wegen der Mehrzahl der nacheinander durchzuführenden Arbeitsschritte umständlich und zeitaufwendig.

Bei einem anderen bekannten Solardeckel (DE 199 11 811 C1) sind die Solarzellen in einen elastischen Folienverbund eingebettet, der sich mit einem Auslaufbereich außen über die Solarzellen hinaus erstreckt und abdichtend zwischen einem Trägerelement und der Deckelscheibe eingeklemmt ist. Hierbei dient der eingeklemmte Auslaufbereich als Abddichtung gegenüber der am Außenrand der Deckelscheibe angebrachten Umschäumung.

Bei der Herstellung der bekannten Solardeckel, bei denen ein Kunststoffrahmen an die transparente Scheibe angeschäumt werden soll, nachdem bereits ein Solarzellenfeld an der Scheibe angebracht worden ist (DE 197 39 615 C1, DE 199 11 811 C1), sind jeweils besondere Maßnahmen zu treffen, um eine Abdichtung, d.h. Begrenzung des Schäumbereichs gegenüber dem Solarzellenfeld, zu erzielen, ohne dabei die Solarzellen zu beschädigen.

Der Erfindung liegt die Aufgabe zugrunde, die Fertigung des gattungsgemäßen Solardeckels zu vereinfachen. Die Aufgabe schließt auch die Bereitstellung eines Verfahrens zur Herstellung dieses Solardeckels ein.

Diese Aufgabe wird erfindungsgemäß durch die Merkmale des Anspruchs 1 und hinsichtlich des Herstellungsverfahrens durch die Merkmale des Anspruchs 8 gelöst. Vorteilhafte oder zweckmäßige Weiterbildungen ergeben sich aus den jeweiligen Unteransprüchen und sind nachfolgend ebenfalls näher beschrieben.

Bei der erfindungsgemäßen Ausbildung des Solardeckels ist dieser an seiner Unterseite ganzflächig unterschäumt, so daß das Solarzellenfeld ohne gegenseitige vertikale Abstände zwischen der transparenten Scheibe und der geschäumten Abdeckschicht angeordnet ist. Da der Rahmen einteilig mit der Abdeckschicht geformt ist, sind keinerlei Abdichtungen zwischen dem Rahmen und dem Solarzellenfeld vorzusehen, weil der Rahmen und die dem Solarzellenfeld anliegende Abdeckschicht einen einheitlichen Schäumbereich bilden. Insbesondere wegen des Fehlens von Dichtungsanpressungen an das Solarzellenfeld sind Beschädigungen der kristallinen Solarzellen ausgeschlossen. Der Schäumvorgang kann bei vergleichsweise höheren Schäumdrücken >1 bar erfolgen, wodurch die Reaktionsgeschwindigkeit zunimmt und die Formschließzeit verkürzt wird. Die Abdeckschicht kann unmittelbar auf das Solarzellenfeld, d.h. die in elastischem Kunststoffmaterial eingebetteten kristallinen Solarzellen, ohne Zwischenlage einer zusätzlichen Abdeck- oder Schutzfolie aufgeschäumt werden, was die Herstellung weiter vereinfacht.

Durch die geschlossene angeschäumte Abdeckschicht an der Deckelunterseite ergibt sich für die Deckelunterseite eine vorteilhafte Designfreiheit. So können nicht nur starre Profilstäbe zur Rahmenverstärkung beabstandet von dem Solarzellenfeld in den Rahmen eingeschäumt sein, wie im Anspruch 2 angegeben ist. Es können auch Verrippungen oder sonstige Ausformungen vorgesehen werden, beispielsweise in Form einer von Rahmenseite zu Rahmenseite durchgehenden Querrippe (Anspruch 3), in welche ein Versteifungsprofil eingeschäumt sein kann (Anspruch 4). Auch können an der Abdeckschicht Aufnahmeräume für elektrische/elektronische Komponenten gebildet sein (Anspruch 5).

Zur Aufnahme eines Gleichstromwandlers und zur direkten Kontaktierung desselben mit der Sammelleitung des Solargenerators kann ein Aufnahmeraum vorzugsweise entsprechend Anspruch 6 seitlich an dem Rahmen gebildet sein, so daß sehr kurze Verbindungsleitungen ermöglicht werden, wodurch geringe Leitungswiderstände und eine hohe Leistungsausbeute erzielt werden.

Das Verfahren zur Herstellung des erfindungsgemäßen Solardeckels umfaßt gemäß Anspruch 8 folgende Schritte:
a) Ein Solarzellenfeld, eingebettet in einen elastischen Folienverbund, wird an der Unterseite einer transparenten Scheibe bis in deren Außenrandbereiche hineinreichend befestigt,
b) die transparente Scheibe mit daran befestigtem Solarzellenfeld wird positioniert in ein Formunterteil einer Schäumform eingelegt, welches eine umlaufende, der Rahmenstruktur entsprechend profilierte Vertiefung und eine im wesentlichen flache, allseits mit der profilierten Vertiefung verbundene und von der Unterseite des Solarzellenfeldes etwa gleichmäßig beabstandete Ausnehmung sowie ggf. von der Ausnehmung ausgehend rippenbildende Nuten od.dgl. aufweist,
c) nach Schließung der Schäumform durch ein Formoberteil werden die profilierte Vertiefung, die flache Ausnehmung und ggf. die Nuten zur Bildung des Rahmens, der Abdeckschicht und ggf. von Rippen an der Abdeckschicht gemeinsam bei einem Druck >1 bar ausgeschäumt,
d) das Formoberteil wird entfernt, und der fertige Solardeckel mit einteilig angeformtem Rahmen und Abdeckschicht wird aus dem Formunterteil entnommen.

Falls eine Verstärkung bzw. Aussteifung für den Solardeckel vorgesehen ist und/oder die mit den Solarzellen des Solarzellenfeldes stromleitend verbindenden Kontakte einen leicht kuppel- und entkuppelbaren Ausgang nach Art einer Steckdose/eines Steckers erhalten sollen (Anspruch 7), werden entsprechend Anspruch 9 vor Durchführung des Verfahrensschrittes b) starre Profilstäbe und ggf. Versteifungsprofile und ggf. Steckverbindungselemente od.dgl. positioniert in das Formunterteil so eingelegt, daß sie beim Schäumvorgang in den Schaumkunststoff ohne Berührung des Solarzellenfeldes eingebettet bzw. im Falle der Steckverbindungselemente od.dgl. mittelbar oder unmittelbar beim Schäumvorgang angeformt oder eingeformt werden (Anspruch 7).

Die Erfindung wird nachfolgend anhand der Ausführungsbeispiele darstellenden Zeichnungen näher erläutert. Darin zeigt:
- Fig. 1: die Unteransicht eines Solardeckels in einer ersten Ausführungsform,
- Fig. 2: den Schnitt durch den Solardeckel entsprechend der Schnittverlaufslinie II-II in Fig. 1,
- Fig. 3: die Unteransicht eines Solardeckels in einer zweiten Ausführungsform,
- Fig. 4: den Schnitt durch den Solardeckel entsprechend der Schnittverlaufslinie IV-IV in Fig. 3,
- Fig. 5: einen abgebrochenen Schnitt durch einen Seitenbereich einer geschlossenen Schäumform mit noch in der Form befindlichem Solardeckel nach dem Anschäumvorgang und
- Fig. 6: einen der Fig. 5 ähnlichen abgebrochenen Schnitt durch einen Seitenbereich einer geschlossenen Schäumform mit noch in der Form befindlichem Solardeckel mit einem über ein Buchsengehäuse mittelbar angeformten Steckverbindungselement in Form einer Buchse nach dem Anschäumvorgang.

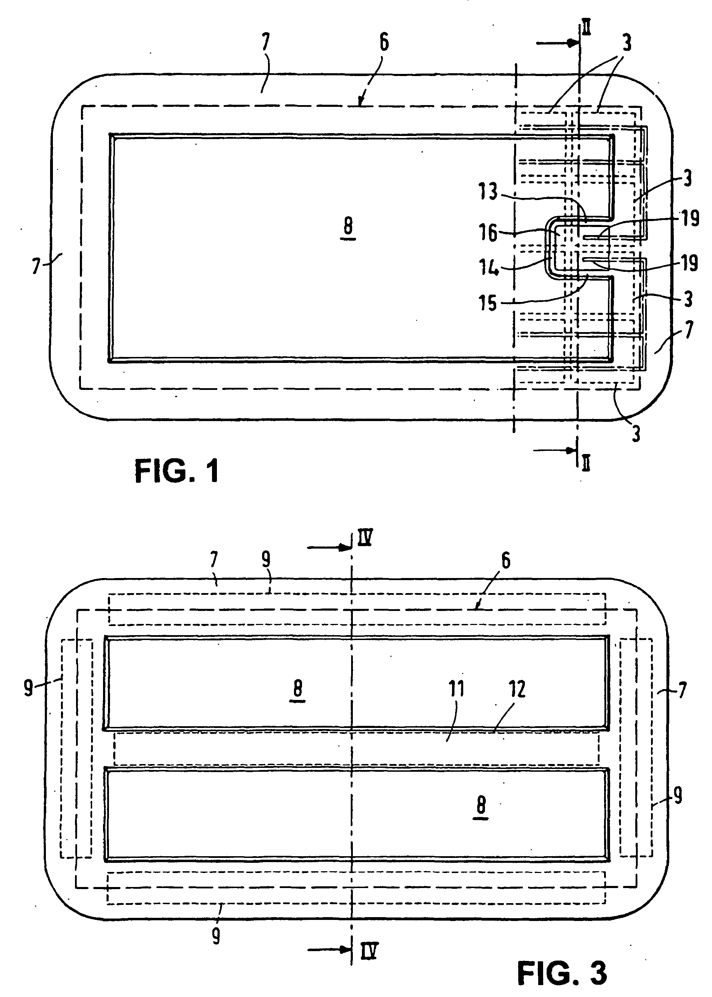

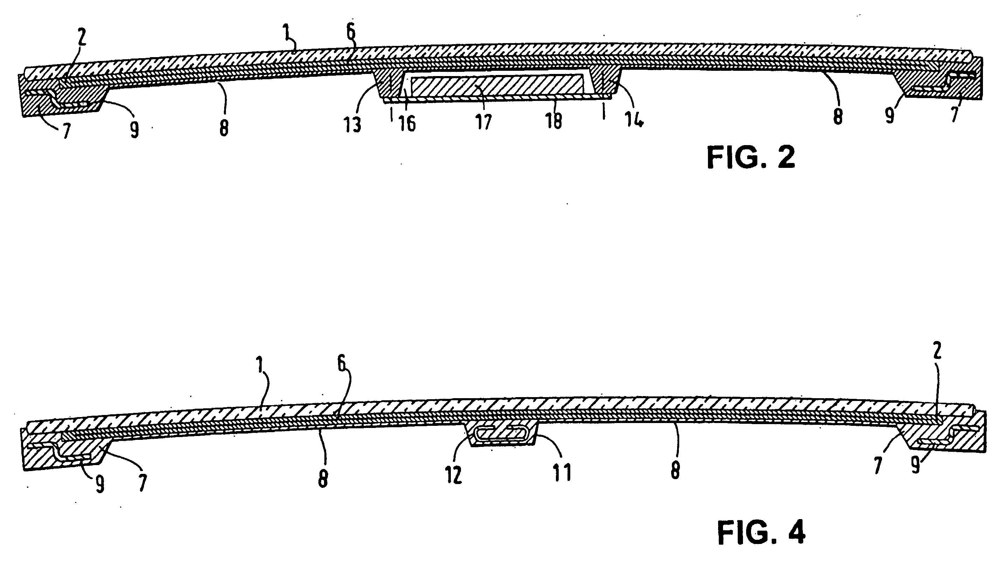

Die in den beiden Ausführungsformen dargestellten Solardeckel unterscheiden sich lediglich bezüglich der Anordnung von angeschäumten Strukturen, so daß zunächst der Deckelaufbau für beide Ausführungsformen anhand der Figuren 1 und 2 nachfolgend beschrieben wird.

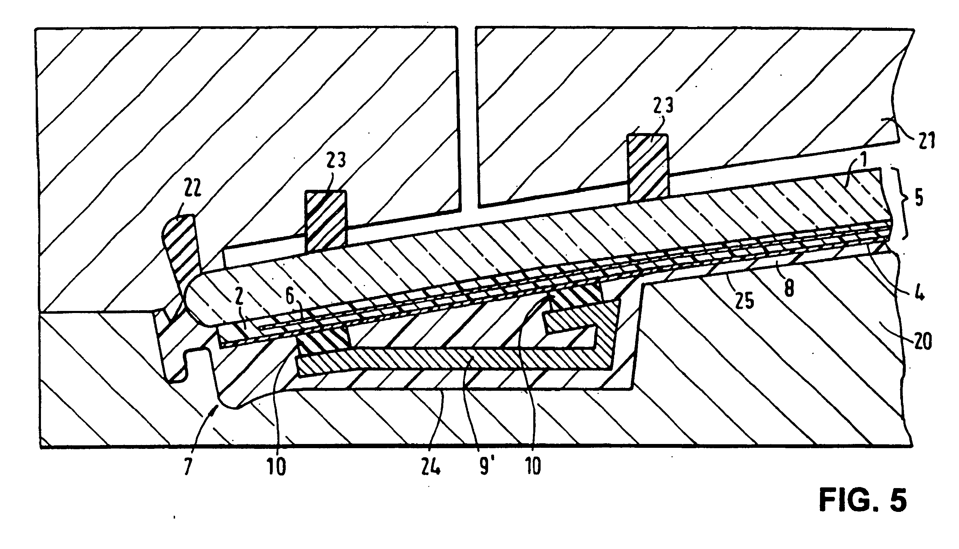

Die transparente Scheibe 1, im Beispiel eine Glasscheibe, die mit ihren Abmessungen, ihrer Umrißgestalt und ihrer Wölbung im wesentlichen die Außenform des Solardeckels definiert, trägt auf ihrer Unterseite die in ein elastisches Kunststoffmaterial 2 eingebetteten kristallinen Solarzellen 3. Das elastische Kunststoffmaterial 2 kann ursprünglich aus zwei getrennten Schmelzkleberfolien aus beispielsweise EVA (Ethylen-Vinyl-Acetat-Copolymer) bestehen, zwischen welche die Solarzellen 3 eingelegt werden. Bei einer Temperatur/Vakuum-Behandlung verschmelzen die beiden Folien zu einer Einbettungsschicht aus dem elastischen Kunststoffmaterial 2, die an der Unterfläche der Scheibe 1 fest haftet und nach unten von einer Abdeckfolie 4 abgedeckt sein kann, wie das aus Fig. 5 hervorgeht. Eine derartige Abdeckfolie ist für die vorliegende Erfindung nicht zwingend erforderlich, weshalb in den Figuren 2 und 4 auf die Darstellung einer Abdeckfolie verzichtet wurde.

Die Scheibe 1, das elastische Kunststoffmaterial 2 mit den darin eingebetteten Solarzellen 3 und ggf. die Abdeckfolie 4 bilden nach ihrer Vereinigung einen einteiligen Verbund 5, der in dieser Gestalt gelagert, transportiert und schließlich zur Fertigstellung des Solardeckels mit einer noch zu beschreibenden Rahmung und gleichzeitig mit einer ebenfalls noch zu beschreibenden Abdeckung des Verbundes 5 versehen wird.

Die kristallinen Solarzellen 3, die bei einer Dicke von nur etwa 0,1 bis 0,3 mm sehr bruchempfindlich sind, können beispielsweise jeweils Flächenabmessungen von etwa 100 x 100 mm aufweisen. Die einzelnen Zellen sind elektrisch miteinander verbunden und besitzen einen gemeinsamen Ausgang, der auf noch zu beschreibende Weise am Solardeckel vorgesehen ist. Die Solarzellen 3 bilden mit gegenseitigen Abständen von etwa 2 bis 5 mm in regelmäßiger Reihenanordnung ein geschlossenes Solarzellenfeld 6, wie das in den Figuren 1 und 3 durch eine gestrichelte Umrißlinie dargestellt ist, wobei in Fig. 1 rechts von einer Strichpunktlinie nur einige der Solarzellen 3 des Solarzellenfeldes 6 eingezeichnet sind. Wie die Zeichnungen ebenfalls verdeutlichen, ist das Solarzellenfeld 6 in seinen Außenabmessungen nur wenig kleiner als die freie Außenfläche der Scheibe 1, so daß die Außenfläche der Scheibe 1 sehr weitgehend mit Solarzellen 3 unterlegt ist, wodurch eine hohe Energieausbeute erzielbar ist.

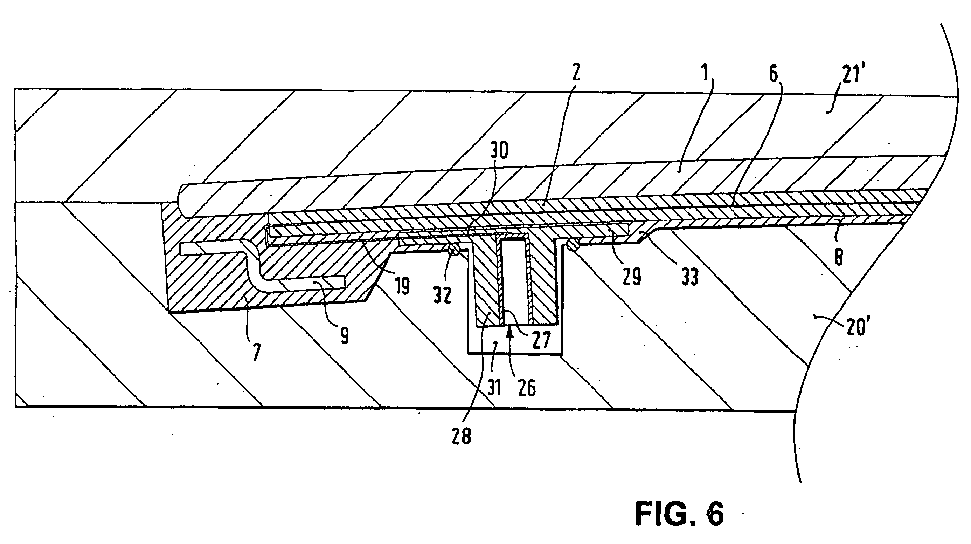

Der Solardeckel besitzt einen im wesentlichen unterhalb der Scheibe 1 befindlichen profilierten Rahmen 7, der aus einem Kunststoff auf Polyurethanbasis besteht, der an den Solardeckel angespritzt bzw. angeschaumt ist. Wie aus den Zeichnungen ersichtlich ist, überdeckt der angeschäumte Rahmen 7 allseits die Außenrandbereiche des Solarzellenfeldes 6 von unten. An den Solardeckel ist ganzflächig eine dem Solarzellenfeld 6 anliegende Abdeckschicht 8 aus Kunststoff angeschäumt, die das Solarzellenfeld 6 von unten vollständig überdeckt und einteilig mit dem Rahmen 7 aus demselben Kunststoff geformt ist. Wie insbesondere Fig. 5 und 6 verdeutlichen, bilden der Rahmen 7 und die Abdeckschicht 8 einen einteiligen Schaumkorper, der durch Anschäumen fest mit der Scheibe 1 und dem Solarzellenfeld 6, ggf. unter Zwischenlage der Abdeckfolie 4, verbunden ist.

Durch die Anschaumung der Abdeckschicht 8 werden nicht nur die Solarzellen 3 wirksam gegen Beschädigungen durch mechanische Belastungen, Stöße u.dgl. geschützt, sondern es werden lokale Druckeinwirkungen auf die Solarzellen vermieden, wie sie durch in der Schäumform an die Unterseite des Solardeckels angedrückte Dichtungen und die Formschließkräfte hervorgerufen werden könnten. Bei dem erfindungsgemäßen Solardeckel und seinem Herstellverfahren fehlen solche Dichtungen zwischen Rahmen 7 und Solarzellenfeld 6, weil beim Anschäumen des Rahmens hier keine Fließbegrenzungen/Dichtungen für den Polyurethankunststoff vorgesehen sind.

Wie aus den Figuren 2, 4, 5 und 6 hervorgeht, wird der Rahmen 7 nur an die Unterseite des Solardeckels und an die Außenkante der Scheibe 1 angeschäumt, so daß praktisch die volle Außenfläche der Scheibe 1 nach oben freiliegt. Der Rahmen 7 weist bei der Darstellung gemäß Fig. 5 eine von den Ausführungsformen gemäß den Figuren 2, 4 und 6 unterschiedliche Profilierung auf. Am Außenrand des in Fig. 5 dargestellten Rahmens 7 befindet sich eine in üblicher Weise ausgestaltete hinterschnittene Aufnahmeprofilierung für eine Randspaltdichtung (nicht dargestellt) des Schiebedachs.

In die vier Rahmenteile des Rahmens 7 sind zur Verstärkung des Rahmens starre Profilstäbe 9 bzw. 9' (Fig. 5) mit Abstand von dem Solarzellenfeld 6 eingeschäumt. Wegen der Bruchempfindlichkeit der Solarzellen 3 ist dafür Sorge zu tragen, daß die Profilstäbe 9 keine zerstörende Druckeinwirkung auf den Verbund 5 ausüben können. Dieses kann durch entsprechende formseitige Maßnahmen erfolgen, durch welche die Profilstäbe schon während des Anschäumens des Rahmens und selbstverständlich auch im fertigen Solardeckel zu dem Verbund 5 auf Abstand gehalten sind. Dies kann auch durch Zwischenlage von Abstandshaltern 10 aus weichem Material, beispielsweise aus Moosgummi oder weichem Polyurethan, zwischen die zueinandergekehrten Flächen des Verbundes 5 und der Profilstäbe 9 bzw. 9' erfolgen, wie das in Fig. 5 gezeigt ist. Die Abstandshalter 10 liegen dem Verbund 5 von unten an und sind mit den Profilstäben 9 bzw. 9' zweckmäßig durch Kleben verbunden.

Bei der in den Figuren 3 und 4 gezeigten Ausführungsform ist zwischen den beiden seitlichen Rahmenteilen eine durchgehende Querrippe 11 an die Abdeckschicht 8 angeschäumt. Diese wird in einer entsprechenden Nut der Schäumform und einteilig mit dem Rahmen 7 und der Abdeckschicht 8 gebildet. In die Querrippe 11 ist ein starres Versteifungsprofil 12 eingeschäumt, das auf dieselbe Weise, wie das mit Bezug auf die Profilstäbe 9, 9' beschrieben wurde, von dem Solarzellenfeld 6 bzw. dem Verbund 5 auf Abstand gehalten ist, so daß von dem Versteifungsprofil 12 keine Druckeinwirkungen auf die Solarzellen 3 ausgehen können.

An die Abdeckschicht können beliebige aus der Abdeckschicht vorspringende Strukturen angeformt werden, für die in der Schäumform entsprechende Aussparungen vorzusehen sind. Bei rippenförmigen Vorsprüngen der Abdeckschicht können das nutenförmige Strukturen sein. Bei der in den Figuren 1 und 2 dargestellten Ausführungsform sind an die Abdeckschicht 8 Rippen 13, 14 und 15 angeformt, durch die zusammen mit dem benachbarten Teil des Rahmens 7 ein nach unten offener Aufnahmeraum 16 für ein elektrisches/elektronisches Bauteil 17 gebildet ist. Der Aufnahmeraum 16 kann nach Anbringung des Bauteils 17 durch einen vorzugsweise abnehmbaren Deckel 18 verschlossen werden (Fig. 2). Bei dem Bauteil 17 kann es sich beispielsweise um einen den Solarzellen 3 zugeordneten DC/DC-Wandler handeln, der direkt an in den Aufnahmeraum 16 geführte elektrische Kontakte 19 (Fig. 1) des Solarzellenfeldes 6 anschließbar ist.

In Fig. 5 ist die aus einem Unterteil 20 und einem Oberteil 21 bestehende Schäumform für die Anschäumung des Rahmens 7 und der Abdeckschicht 8 sowie ggf. vorhandener Rippen in geschlossenem Zustand dargestellt. Eine im Oberteil 21 angebrachte Dichtung 22, die aus einem elastischen Material hergestellt ist, begrenzt den Schäumbereich an der Vorderkante der Scheibe 1. Weiterhin sind am Oberteil Andruckleisten 23 aus elastischem Material angebracht, welche Formschließkräfte auf die Scheibe 1 übertragen und die Scheibe 1 mit dem daran befindlichen Verbund 5 während des Schäumvorgangs in der Form fixieren.

Im Unterteil 20 befinden sich eine den Rahmen 7 bildende und entsprechend profilierte Vertiefung 24 und eine damit ohne Abdichtung verbundene im wesentlichen flache Ausnehmung 25, in welcher die Abdeckschicht 8 beim Schäumvorgang gebildet wird. Der Boden dieser Ausnehmung 25 ist von der Unterseite des Verbundes 5 etwa gleichmäßig beabstandet, so daß eine Abdeckschicht gebildet wird, die an allen Stellen annähernd von gleicher Dicke ist. In den Boden der Ausnehmung 25 können Nuten und sonstige formbildende Vertiefungen eingearbeitet sein.

In Fig. 6 ist dargestellt, daß an die den elektrischen Ausgang des Solarzellenfeldes 6 bildenden Kontakte 19 jeweils ein Steckverbindungselement 26, im gezeichneten Beispiel eine Buchse 27 aus einem elektrisch leitenden Werkstoff, beispielsweise Messing, angeschlossen ist. Die Buchse 27 befindet sich in einem Buchsengehäuse 28, welches die Buchse 27 und den Endbereich des Kontaktes 19 umschließt und zu diesem Zweck aus einem geeigneten Kunststoff, beispielsweise auf PU-Basis, spritz- oder schäumgeformt ist. Selbstverständlich kann das Buchsengehäuse 28 mehrere z.B. zwei Buchsen 27 und eine entsprechende Anzahl von Kontakten 19 umschließen.

Das Buchsengehäuse 28 besitzt eine flanschartige Fußplatte 29, die mit der Unterseite des das Solarzellenfeld 6 einbettenden Kunststoffmaterials 2 oder ggf. der Abdeckfolie 4 mittels eines beidseitig klebenden Klebebandes 30 od.dgl. verbunden ist. Das Klebeband 30 dient der Vorfixierung des Buchsengehäuses 28 in einer vorbestimmten Position, die auf eine das Buchsengehäuse 28 bei der Schäumformung aufnehmende Ausnehmung 31 im Unterteil 20' der Schäumform abgestimmt ist. Eine Ringdichtung 32 dichtet die Unterseite der Fußplatte 29 gegenüber der Ausnehmung 31 ab, so daß beim Schäumvorgang kein Kunststoff in die Ausnehmung 31 eindringen kann.

Nach dem Schäumvorgang ist die Fußplatte 29 des Buchsengehäuses 28 im wesentlichen in den geschäumten PU-Kunststoff eingeformt, im gezeigten Beispiel in der Nähe des Rahmens 7 in einer Verdickung 33 der Abdeckschicht 8. Die Steckverbindungselemente 26 können auf entsprechende Weise aber auch am Rahmen 7 oder an anderer Stelle der Abdeckschicht 8 oder auch innerhalb des Aufnahmeraums 16 (Fig. 1, 2) angebracht werden. Anstelle der durch das Buchsengehäuse 28 mittelbar angebrachten Buchse 27 kann diese aber auch unmittelbar beim Schäumvorgang an- bzw. eingeformt werden.

Das Schäumverfahren kann sowohl mit einem niedrigen Schäumdruck <1 bar als auch mit einem höheren Schäumdruck >1 bar durchgeführt werden. Wegen der höheren Rekationsgeschwindigkeit werden für die Zwecke der vorliegenden Erfindung höhere Schäumdrücke, die bis zu etwa 12 bar (Hochdruckverfahren) betragen können, bevorzugt, ohne daß dabei Beschädigungen der Solarzellen 3 auftreten.

Die Erfindung stellt einen Solardeckel zur Verfügung, der aus einer transparenten Scheibe 1, einem an der Unterseite der Scheibe 1 befestigten Verbund 5, der aus einem Solarzellenfeld 6 und einem dieses einbettenden Kunststoffmaterial 2 besteht, einem an den Umfangsrandbereich der Scheibe 1 angeschäumten, ggf. durch eingebettete Profilstäbe 9, 9' verstärkten Rahmen 7 und einer mit dem Rahmen 7 einteilig verbundenen schäumgeformten Abdeckschicht 8 gebildet ist. Der auf diese Weise ohne auf den Verbund 5 mit Andruckkräften einwirkenden Dichtungs- und Schaumbegrenzungsanordnungen herstellbare einfach aufgebaute Solardeckel erlaubt die Anwendung höherer Schäumdrücke ohne Beschädigungsgefahr für die empfindlichen Solarzellen. Die Abdeckschicht 8 schützt den Verbund 5 von unten und ermöglicht die Schäumanformung von Vorsprüngen, Rippen u.dgl. Vorgeschlagen wird auch ein bevorzugtes Verfahren zur Herstellung des Solardeckels, bei dem der Schäumdruck >1 bar ist.

### Bezugszeichenliste

- 1: transparente Scheibe
- 2: Kunststoffmaterial
- 3: Solarzellen
- 4: Abdeckfolie
- 5: Verbund
- 6: Solarzellenfeld
- 7: Rahmen
- 8: Abdeckschicht
- 9, 9': Profilstäbe
- 10: Abstandshalter
- 11: Querrippe
- 12: Versteifungsprofil

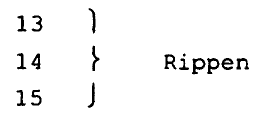

- 16: Aufnahmeraum
- 17: elektrisches/elektronisches Bauteil
- 18: Deckel
- 19: elektrische Kontakte
- 20, 20': Unterteil
- 21, 21': Oberteil
- 22: Dichtung
- 23: Andruckleisten
- 24: Vertiefung
- 25: Ausnehmung
- 26: Steckverbindungselemente
- 27: Buchse
- 28: Buchsengehäuse
- 29: Fußplatte
- 30: Klebeband
- 31: Ausnehmung
- 32: Ringdichtung
- 33: Verdickung

## Patentansprüche

1. Als Solargenerator ausgebildeter Deckel zum Verschließen einer Öffnung in der Karosserie eines Fahrzeugs, insbesondere für Kraftfahrzeug-Schiebedächer, mit einer transparenten Scheibe (1), an deren Unterseite ein Solarzellenfeld (6) angeordnet ist, und mit einem Rahmen (7) aus Kunststoff, der an einen Umfangsrandbereich der Scheibe (1) angeschäumt ist und Außenrandbereiche des Solarzellenfeldes (6) von unten überdeckt, **dadurch gekennzeichnet, daß** an den Deckel ganzflächig eine dem Solarzellenfeld (6) anliegende Abdeckschicht (8) aus Kunststoff angeschaumt ist, die das Solarzellenfeld (6) von unten vollständig überdeckt und einteilig mit dem Rahmen (7) geformt ist.

2. Deckel nach Anspruch 1, **dadurch gekennzeichnet, daß** starre Profilstäbe (9, 9') zur Verstärkung des Rahmens (7) beabstandet von dem Solarzellenfeld (6) in den Rahmen (7) eingeschäumt sind.

3. Deckel nach Anspruch 1 oder 2, **dadurch gekennzeichnet, daß** zwischen den beiden seitlichen Rahmenteilen eine durchgehende Querrippe (11) an die Abdeckschicht (8) angeschäumt ist.

4. Deckel nach Anspruch 3, **dadurch gekennzeichnet, daß** in die Querrippe (11) ein Versteifungsprofil (12) eingeschäumt ist.

5. Deckel nach Anspruch 1 oder 2, **dadurch gekennzeichnet, daß** an die Abdeckschicht (8) Rippen (13, 14, 15) angeformt sind, durch die mindestens ein nach unten offener Aufnahmeraum (16) für elektrische/elektronische Komponenten (17) od.dgl. gebildet ist.

6. Deckel nach Anspruch 5, **dadurch gekennzeichnet, daß** ein Aufnahmeraum (16) seitlich an dem Rahmen (7) gebildet ist, der durch den Rahmen selbst und durch Rippen (13, 14, 15) an der Abdeckschicht (8) begrenzt ist.

7. Deckel nach einem der Ansprüche 1 bis 6, **dadurch gekennzeichnet, daß** an Kontakte (19), die mit den Solarzellen (3) des Solarzellenfeldes (6) stromleitend verbunden sind, Steckverbindungselemente od.dgl. (26) angeschlossen sind, die durch An- bzw. Umschäumen an den Rahmen (7) und/oder die Abdeckschicht (8) unmittelbar oder mittelbar angeformt bzw. eingeformt sind.

8. Verfahren zur Herstellung eines Deckels nach einem der vorhergehenden Ansprüche, umfassend den Schritt:
a) ein Solarzellenfeld (6), eingebettet in einen elastischen Folienverbund (2), wird an der Unterseite einer transparenten Scheibe (1) bis in deren Außenrandbereiche hineinreichend befestigt,
**gekennzeichnet durch** die folgenden Schritte:
b) die transparente Scheibe (1) mit daran befestigtem Solarzellenfeld (6) wird positioniert in ein Formunterteil (20) einer Schäumform (20, 21; 20', 21') eingelegt, welches eine umlaufende, der Rahmenstruktur entsprechend profilierte Vertiefung (24) und eine im wesentlichen flache, allseits mit der profilierten Vertiefung (24) verbundene und von der Unterseite des Solarzellenfeldes (6) etwa gleichmäßig beabstandete Ausnehmung (25) sowie ggf. von der Ausnehmung (25) ausgehend rippenbildende Nuten od.dgl. aufweist,
c) nach Schließung der Schäumform (20, 21; 20', 21') **durch** ein Formoberteil (21, 21') werden die profilierte Vertiefung (24), die flache Ausnehmung (25) und ggf. die Nuten zur Bildung des Rahmens (7), der Abdeckschicht (8) und ggf. von Rippen (13, 14, 15) an der Abdeckschicht (8) gemeinsam bei einem Druck >1 bar ausgeschäumt, und
d) das Formoberteil (21, 21') wird entfernt und der fer tige Solardeckel mit einteilig angeformtem Rahmen (7) und Abdeckschicht (8) wird aus dem Formunterteil (20, 20') entnommen.

9. Verfahren nach Anspruch 8, **dadurch gekennzeichnet, daß** vor Schritt b) starre Profilstäbe (9, 9') und ggf. Versteifungsprofile (12) und ggf. Steckverbindungselemente od. dgl. (26) positioniert in das Formunterteil (20, 20') eingelegt werden.

## Claims

1. A cover constructed as a solar generator for closing an opening in the bodywork of a vehicle, in particular for motor vehicle sunroofs, having a transparent panel (1), on the underside of which there is arranged a solar cell field (6), and having a frame (7) of plastics, which is foamed onto an peripheral edge area of the panel (1) and covers outer edge areas of the solar cell field (6) from below, **characterized in that** a plastics backing layer (8) adjoining the solar cell field (6) is foamed onto the cover over the entire surface, said backing layer (8) covering the solar cell field (6) completely from below and being formed in one piece with the frame (7).

2. A cover according to claim 1, **characterized in that** rigid profiled bars (9, 9') are foamed into the frame (7) at a distance from the solar cell field (6) to reinforce the frame (7).

3. A cover according to claim 1 or 2, **characterized in that** a continuous transverse rib (11) is foamed onto the backing layer (8) between the two lateral frame parts.

4. A cover according to claim 3, **characterized in that** a reinforcing profile (12) is foamed into the transverse rib (11).

5. A cover according to claim 1 or 2, **characterized in that** ribs (13, 14, 15) are molded onto the backing layer (8), by means of which ribs there is formed at least one receiving space (16), open at the bottom, for electrical/electronic components (17) or the like.

6. A cover according to claim 5, **characterized in that** a receiving space (16) is formed laterally on the frame (7) and is defined by the frame itself and by ribs (13, 14, 15) on the backing layer (8).

7. A cover according to one of the claims 1 to 6, **characterized in that** plug connection elements or the like (26) are connected to contacts (19), which are connected in current-conducting manner to the solar cells (3) of the solar cell field (6), said plug connection elements being foam-molded directly or indirectly respectively onto or into the frame (7) and/or the backing layer (8).

8. A method of producing a cover according to one of the preceding claims, comprising the following step:
a) a solar cell field (6), embedded in a resilient film assembly (2), is attached to the underside of a transparent panel (1) so as to extend into the outer edge areas thereof,
**characterized by** the following steps:
b) the transparent panel (1) with the solar cell field (6) attached thereto is inserted into the bottom part (20) of a foaming mold (20, 21; 20', 21') in positioned manner, said bottom part comprising a peripheral depression (24) shaped in accordance with the frame structure and a substantially shallow recess (25) connected on all sides with the shaped depression (24) and spaced approximately evenly from the underside of the solar cell field (6), together optionally with grooves or the like forming ribs extending from the recess (25),
c) after closure of the foaming mold (20, 21; 20', 21') by a mold top (21, 21'), the shaped depression (24), the shallow recess (25) and optionally the grooves are jointly back-filled with foam at a pressure of > 1 bar for forming the frame (7), the backing layer (8) and optionally ribs (13, 14, 15) on the backing layer (8), and
d) the mold top (21, 21') is removed and the finished solar cover with frame (7) and backing layer (8) molded in one piece thereon is removed from the mold bottom (20, 20').

9. A method according to claim 8, **characterized in that** rigid profiled bars (9, 9') and optionally reinforcing profiles (12) and optionally plug connection elements or the like (26) are inserted into the bottom (20, 20') of the mold in positioned manner prior to step b).

## Revendications

1. Panneau de couverture réalisé en tant générateur solaire, pour fermer une ouverture dans la carrosserie d'un véhicule, notamment pour toits coulissants de véhicules automobiles, comprenant une vitre (1) transparente, sur la face inférieure de laquelle est disposé un champ de cellules solaires (6), et comprenant un cadre (7) en matière plastique, qui est moulé par expansion alvéolaire sur une zone de bord périphérique de la vitre (1) et recouvre par le dessous des zones de bord extérieur du champ de cellules solaires (6), **caractérisé en ce que** sur toute la surface du panneau de couverture est moulé par expansion alvéolaire, une couche de recouvrement (8) en matière plastique, appliquée sur le champ de cellules solaires (6), recouvrant en totalité le champ de cellules solaires (6) par le dessous, et moulée d'un seul tenant avec le cadre (7).

2. Panneau de couverture selon la revendication 1, **caractérisé en ce que** des barres profilées (9, 9') pour renforcer le cadre (7), sont intégrées au cadre (7) en y étant surmoulées par expansion alvéolaire et espacées du champ de cellules solaires (6).

3. Panneau de couverture selon la revendication 1 ou 2, **caractérisé en ce qu'**entre les deux parties de cadre latérales, une nervure transversale (11) continue est moulée par expansion alvéolaire sur la couche de recouvrement (8).

4. Panneau de couverture selon la revendication 3, **caractérisé en ce que** dans la nervure transversale (11) est intégré un profil de renfort (12) en y étant surmoulé par expansion alvéolaire.

5. Panneau de couverture selon la revendication 1 ou 2, **caractérisé en ce que** sur la couche de recouvrement (8) sont formées par moulage, des nervures (13, 14, 15) qui forment au moins un logement de réception (16) ouvert vers le bas et destiné à des composants électriques/électroniques (17) ou éléments similaires.

6. Panneau de couverture selon la revendication 5, **caractérisé en ce qu'**un logement de réception (16) est formé latéralement au cadre (7) en étant délimité par le cadre lui-même et par les nervures (13, 14, 15) sur la couche de recouvrement (8).

7. Panneau de couverture selon l'une des revendications 1 à 6, **caractérisé en ce qu'**à des contacts (19), qui sont reliés sur le plan électrique aux cellules solaires (3) du champ de cellules solaires (6), sont raccordés des éléments de connexion enfichables ou similaires (26), qui sont moulés ou surmoulés directement ou indirectement par expansion alvéolaire sur le cadre (7) et/ou la couche de recouvrement (8).

8. Procédé de fabrication d'un panneau de couverture selon l'une des revendications précédentes, comprenant l'étape suivante :
a) un champ de cellules solaires (6), noyé dans un film composite élastique (2), est fixé sur la face inférieure d'une vitre (1) transparente en s'étendant jusque dans ses zones de bord extérieur,
**caractérisé par** les étapes suivantes :
b) la vitre (1) transparente sur laquelle est fixé le champ de cellules solaires (6), est déposée de manière positionnée, dans une partie inférieure de moule (20) d'un moule d'expansion alvéolaire (20, 21 ; 20', 21'), qui présente un creux périphérique (24) profilé de manière correspondante à la structure du cadre, et un évidemment (25) sensiblement plat, relié sur tous les côtés au creux profilé (24) et espacé sensiblement uniformément de la face inférieure du champ de cellule solaires (6), ainsi que, le cas échéant des rainures ou éléments similaires issus de l'évidement (25) et formant des nervures,
c) après fermeture du moule d'expansion alvéolaire (20, 21 ; 20', 21') par une partie de moule supérieure (21, 21'), on remplit par moulage par expansion alvéolaire, à une pression >1 bar, en commun, le creux (24), l'évidement plat (25) et, le cas échéant, les rainures, pour former le cadre (7), la couche de recouvrement (8) et, le cas échéant, des nervures (13, 14, 15) sur la couche de recouvrement (8), et
d) la partie de moule supérieure (21, 21') est retirée, et le panneau solaire de couverture terminé, sur lequel sont formés d'un seul tenant le cadre (7) et la couche de recouvrement (8), est extrait de la partie de moule inférieure (20, 20').

9. Procédé selon la revendication 8, **caractérisé en ce qu'**avant l'étape b), on dépose de manière positionnée dans la partie de moule inférieure (20, 20'), des barres profilées (9, 9'), et, le cas échéant, des profilés de renfort (12), ainsi que, le cas échéant, des éléments de connexion enfichables ou éléments similaires (26).
